# FASCICULE DE BREVET EUROPEEN

(11) **EP 1 767 809 B1**
(45) Date de publication et mention de la délivrance du brevet: **29.12.2010**
(21) Numéro de dépôt: 06300949.2
(22) Date de dépôt: 13.09.2006
(51) Int. Cl.: F16F 9/34, F16F 9/348

(54) **Dispositif d'amortissement et amortisseur hydraulique comportant un tel dispositif**
Dämpfungseinrichtung und hydraulicher Dämpfer mit dieser Einrichting
Damping device and hydraulic damper comprising such a device

(30) Priorité: 23.09.2005 FR 0509763
(43) Date de publication de la demande: 28.03.2007
(73) Titulaire: Peugeot Citroën Automobiles SA, 78140 Vélizy-Villacoublay (FR)
(72) Inventeur: Mennesson, Dominique, 94700 Maison-Alfort (FR)

(56) Documents cités:
- GB-A- 726 327
- GB-A- 1 309 322
- US-A- 3 302 756
- US-A- 4 132 395
- US-A- 4 460 074
- US-A- 5 316 113
- US-A- 5 921 360

## Description

La présente invention concerne un dispositif d'amortissement à laminage hydraulique, ainsi qu'un amortisseur hydraulique comportant un tel dispositif.

Les dispositifs d'amortissement à laminage hydraulique ont pour rôle d'amortir les oscillations de mouvement d'un flux hydraulique entre deux volumes délimités à l'intérieur d'un corps cylindrique, notamment à l'intérieur d'un amortisseur hydraulique. L'utilisation classique d'un amortisseur hydraulique est celle que l'on en fait dans les véhicules automobiles où ils sont utilisés dans les suspensions. La suspension d'un véhicule automobile a pour rôle de réduire les chocs provoqués par le déplacement du véhicule sur une surface non homogène, notamment sur une surface comportant toute sorte de dénivellements. Les amortisseurs permettent à chaque roue de rester toujours en contact avec la surface sur laquelle le véhicule évolue et permettent ainsi de conserver une assiette de caisse la plus constante possible. Ce résultat est obtenu en interposant entre la caisse ou le châssis d'un véhicule automobile et les roues de celui-ci un élément capable de transformer l'énergie des oscillations de la caisse et celle des roues en un travail de laminage d'un fluide hydraulique passant de manière forcée entre deux volumes délimités à l'intérieur de cet élément. Dans sa forme la plus simple, un dispositif d'amortissement à laminage hydraulique comporte un cylindre à l'intérieur duquel est disposé un piston solidaire d'une tige d'amortisseur. Le piston divise l'espace intérieur du cylindre en deux volumes remplis d'un fluide hydraulique et reliés entre eux par une ou plusieurs ouvertures calibrées pratiquées dans le piston. En attachant le dispositif d'amortissement respectivement par la tige d'amortisseur ou par le cylindre au moyeu d'une roue et par l'autre de ces deux éléments à la caisse du véhicule automobile, tout mouvement axial du piston oblige à déplacer une partie du fluide hydraulique de l'un des deux volumes vers l'autre en passant par les ouvertures du piston.

Les ouvertures pratiquées dans le piston étant calibrées selon les caractéristiques d'amortissement que l'on veut obtenir, le fluide hydraulique mettra plus ou moins de temps pour passer d'un volume à l'autre. Avantageusement, certains de ces passages sont obturés par des éléments obturateurs élastiques ou des diaphragmes déformables qui ne peuvent être déplacés de leur position d'obturation que par une force minimale dépassant un seuil inférieur prédéterminé suivant les contraintes d'une application particulière.

La technologie des amortisseurs hydrauliques actuelle est généralement fondée sur des disques fléchissant qui obturent des ouvertures, ou canaux hydrauliques, selon les lois d'ouverture ajustées à chaque véhicule, voire à chaque motorisation et, notamment, à chaque utilisation, et cela aussi en vue de la nature du terrain sur lequel le véhicule est destiné à évoluer et en fonction de la charge qu'il doit transporter.

On connait notamment du document GB 726 327 A un dispositif d'amortissement à laminage hydrolique.

Selon une alternative de réalisation, les disques fléchissant des amortisseurs sont remplacés par des ensembles clapet-ressort. Cependant, il s'est avéré qu'il était difficile de maîtriser le bruit engendré par les éléments de tels amortisseurs hydrauliques et que ceux-ci montraient de grandes dispersions de la loi d'amortissement.

Par ailleurs, l'évolution des véhicules automobiles (par exemple masses en hausse, bruits en baisse) et les attentes des utilisateurs des véhicules automobiles (confort, silence, sécurité active, constance des performances) exigent une amélioration des amortisseurs hydrauliques, plus particulièrement en ce qui concerne leur sensibilité thermique, leur plages de fonctionnement et leur bruyance, tout en conservant des caractéristiques positives telles qu'un potentiel de courbes complexes en compression.

Le but de l'invention est donc de proposer un dispositif d'amortissement permettant de palier les inconvénients dés dispositifs antérieurs.

Le but de l'invention est atteint avec un dispositif d'amortissement à laminage hydraulique pour amortir des oscillations de mouvement d'un fluide hydraulique entre deux volumes délimités à l'intérieur d'un cylindre, conforme à la revendication 1.

Selon les caractéristiques particulières que l'on souhaite apporter au dispositif d'amortissement de l'invention, l'invention concerne également les caractéristiques ci-après, considérées isolément ou selon toutes combinaisons techniquement possibles
- le limiteur est indexé par rapport au piston par des moyens formant butée coopérant avec des moyens formant encoche disposés respectivement sur le limiteur et le piston, ou inversement ;
- le limiteur est réalisé dans le même matériau que le piston ;
- le limiteur comporte sur sa face circonférentielle des brise-jets disposés en regard de bossages circonférentiels du piston ;
- le limiteur est pourvu de plusieurs facettes conformées de façon à former pour le fluide hydraulique ayant passé les canaux de compression du piston, ensemble avec le piston, des chemins d'écoulement complexes permettant d'atténuer l'effet d'onde de choc susceptible d'être produit par le fluide hydraulique après ouverture d'un clapet-ressort ;
- le dispositif comprend deux disques fléchissants disposés du côté opposé du piston par rapport au limiteur ;
- le premier disque fléchissant (120) est muni de trous (121) et il est associé à un deuxième disque fléchissant disposé du côté opposé du piston (110) par rapport au limiteur ;
- le dispositif comprend un clapet ayant la forme générale d'un disque évidé en son centre et pourvu d'un rebord, le rebord étant pourvu d'ouvertures radiales, ledit clapet étant disposé sur le premier ou les premier et deuxième disques fléchissants ;
- le dispositif comprend un clapet ayant la forme générale d'un disque évidé en son centre et pourvu d'un rebord, le rebord étant pourvu d'ouvertures radiales, et le clapet est couplé au premier ou aux premier et deuxième disques fléchissants afin de former une chambre de recompression du fluide en aval des trous.

Le but de l'invention est également atteint avec un amortisseur hydraulique, par exemple un amortisseur destiné à être utilisé dans un véhicule automobile, et qui comprend un dispositif d'amortissement à laminage hydraulique selon la description ci-avant.

D'autres caractéristiques et avantages de la présente invention ressortiront de la description ci-après d'un mode de réalisation. La description est effectuée en relation avec les dessins annexés dans lesquels :
- la figure 1 représente un dispositif d'amortissement pour un amortisseur hydraulique selon un premier mode de réalisation de l'invention ;
- la figure 2 représente un dispositif d'amortissement selon un deuxième mode de réalisation de l'invention ; et
- la figure 3 montre schématiquement l'emplacement d'un dispositif d'amortissement de l'invention dans un amortisseur hydraulique.

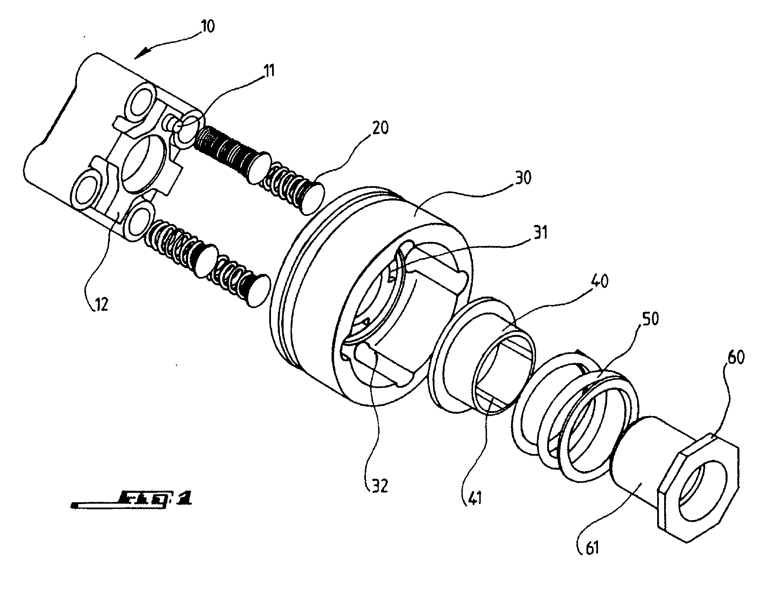

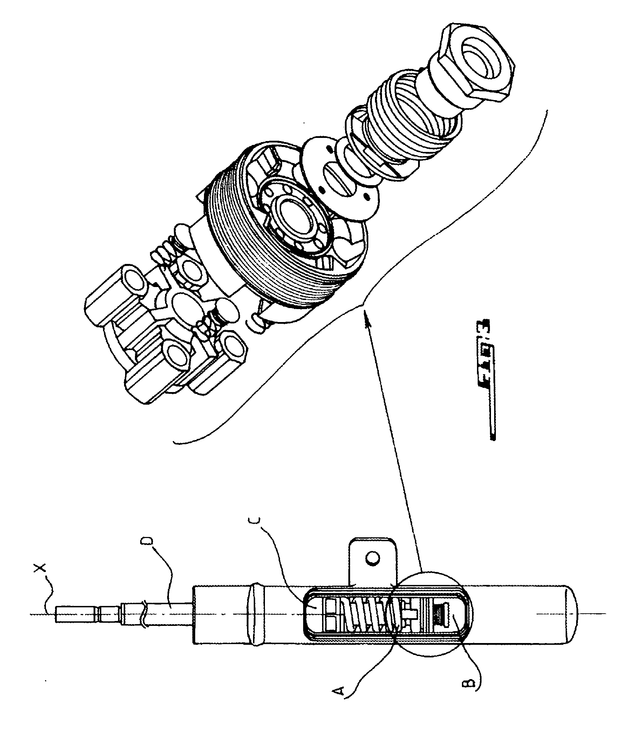

Comme la figure 1 le montre, et selon un premier mode de réalisation, un dispositif d'amortissement selon l'invention comporte, dans sa configuration de base, un dispositif d'amortissement à laminage hydraulique qui comprend un piston 30 destiné à évoluer dans un cylindre hydraulique C (voir figure 3) suivant un axe principal X du cylindre C sous l'action d'une tige d'amortisseur D. Le piston 30 sépare deux volumes A, B délimités à l'intérieur du cylindre C.

Afin qu'un fluide hydraulique contenu dans les deux volumes A, B puisse se déplacer de l'un des deux volumes vers l'autre lorsque le piston 30 est déplacé à l'intérieur du cylindre C à la suite de mouvements oscillatoires transmis sur le piston 30, le piston 30 est pourvu de canaux de détente 31 et de canaux de compression 32. Les canaux de compression 32 sont obturés par quatre ensembles clapet-ressort 20 alors que les canaux de détente 31 du piston 30 sont recouverts par un clapet de détente 40.

Le dispositif d'amortissement de l'invention comprend par ailleurs un limiteur 10 destiné à être assemblé avec le piston 30 sur une extrémité filetée d'une tige d'amortisseur D (voir figure 3).

A très basse vitesse de déplacement du fluide hydraulique, les canaux de compression 32 du piston 30 restent obturés par les ensembles clapet-ressort 20. De manière analogue, les canaux de détente 31 du piston 30 restent recouverts par le clapet de détente 40. En conséquence, le fluide hydraulique ne peut circuler que par des canaux 41 usinés dans le clapet 40, et dans une moindre mesure, au travers du jeu de fonctionnement entre le clapet 40 et la partie cylindrique 61 de l'écrou 60. Le nombre et la section des canaux 41 permettent d'ajuster les caractéristiques d'amortissement à basse vitesse du dispositif d'amortissement de l'invention.

Lorsque la vitesse augmente en compression, l'augmentation consécutive de la pression fait ouvrir progressivement les clapets-ressorts 20. Leurs caractéristiques de précharge, de débattement et de raideur permettent d'ajuster les vitesses auxquelles ils s'ouvrent et donc les caractéristiques d'amortissement en compression.

De manière analogue, lorsque la vitesse augmente en détente, l'augmentation consécutive de la pression fait ouvrir progressivement le clapet 40. Les caractéristiques de précharge et les raideurs du ressort 50 permettent d'ajuster la vitesse à laquelle le clapet 40 s'ouvre et donc les caractéristiques d'amortissement en détente.

Par ailleurs, le limiteur 10 est pourvu de quatre profils 12 qui ont pour fonction de dévier les jets de fluide hydraulique sortant des canaux de compression 32 afin d'éviter de perturber le fonctionnement des clapets de compression 20.

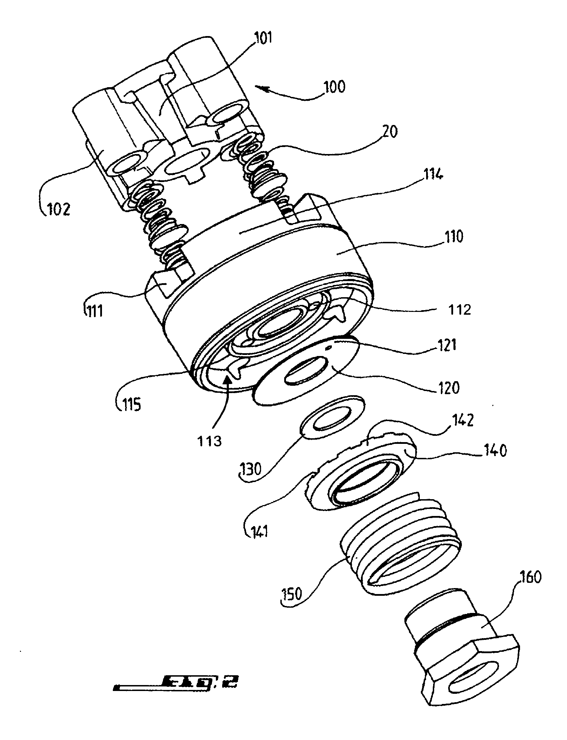

La figure 2 montre un dispositif d'amortissement selon un mode de réalisation préféré de l'invention. Ce dispositif comprend un piston 110 pourvu de canaux 112 permettant au fluide hydraulique de se déplacer, dans les deux sens, de l'un à l'autre de deux volumes A, B délimités à l'intérieur d'un cylindre C de l'amortisseur. Le dispositif d'amortissement comprend en outre des moyens d'obturation tarés sous la forme d'ensembles clapet-ressort 20 des canaux de compression 113.

Par ailleurs, le dispositif d'amortissement comprend un limiteur 100 conformé pour se déplacer solidairement avec le piston 110 suivant l'axe principal X. Par ailleurs, le limiteur 100 est indexé par rapport au piston 110 par des moyens formant butée positive par exemple, une ou plusieurs colonnettes 102 (quatre colonnettes dans l'exemple illustré à la figure 2) réparties sur la périphérie extérieure du limiteur 100 et en saillie de ce dernier pour coopérer respectivement avec des moyens 111 formant encoches (quatre encoches dans l'exemple de la figure 2). Ces encoches sont ménagées dans la face du piston 110 en regard du limiteur 100 ; les quatre encoches définissant respectivement quatre bossages 114. Grâce à cette disposition selon l'invention, le moyen d'indexation de l'axe du limiteur 100, qui correspond à l'axe principal X du dispositif d'amortissement et à l'axe principal du cylindre C, permet un positionnement angulaire plus précis entre le limiteur 100 et le piston 110.

Avantageusement, le limiteur 100 et le piston 110 sont réalisés en le même matériau, de préférence en acier fritté, afin que le limiteur 100 et le piston 110 ne risquent pas d'être soumis à des dilatations thermiques différentielles. Indépendamment d'une sensibilité réduite thermique du piston 110 et du limiteur 100 qui en résulte, cette absence de dilatation thermique différentielle apporte une plus grande robustesse de l'assemblage vissé du dispositif de l'invention.

Par ailleurs, le limiteur 100 est pourvu de brise-jets 101 disposés en regard de bossages 114 du piston 110. Grâce à cette disposition de l'invention, les jets d'huile sortant d'un ensemble clapet-ressort 20 venant de s'ouvrir, ne peuvent perturber ceux sortant des autres ensembles clapet-ressort 20. Il en résulte une baisse du bruit émis par le dispositif d'amortissement de l'invention.

Le limiteur 100 présente une géométrie assez complexe, due en partie à la présence des quatre colonnettes 102 et due, d'autre part, à la présence de sièges destinés à recevoir les ensembles clapet-ressort 20 ainsi qu'à la présence de brise-jets 101. Cette forme facettisée du limiteur 100 fait que des ondes de choc engendrées à l'ouverture d'un clapet-ressort 20 sont de multiples fois réfléchies et s'atténuent en conséquence. Il en résulte une moindre excitation de la colonne de fluide hydraulique ou de la structure de l'amortisseur dans lequel le dispositif d'amortissement de l'invention est inséré. Dans l'ensemble, il en résulte une baisse du bruit émis par l'amortisseur.

Lorsque les efforts agissant sur le piston 110 du dispositif d'amortissement sont relativement faibles et qu'il en résulte une très basse vitesse de déplacement du piston à l'intérieur du cylindre C dans lequel le dispositif de l'invention est logé, les canaux de détente 112 sont recouverts par un premier disque fléchissant 120 disposé du côté opposé du piston 110 par rapport au limiteur 100. De ce fait, le fluide hydraulique ne peut s'écouler qu'au travers de trous 121 pratiqués dans le premier disque fléchissant 120. Le nombre et la section de chacun des trous 121 sont prédéterminés de manière à pouvoir ajuster les caractéristiques d'amortissement à basse vitesse selon l'utilisation qui est faite d'un amortisseur comportant un dispositif d'amortissement de l'invention. Par rapport au mode de réalisation de base représenté sur la figure 1, le mode de réalisation selon la figure 2 d'un dispositif d'amortissement de l'invention comporte l'avantage d'une restriction de flux extrêmement courte afin de favoriser un écoulement de type turbulent. En effet, dans ce type d'écoulement, l'effort d'amortissement est proportionnel à la masse volumique du fluide hydraulique, par opposition à un écoulement laminaire dans la version de base où l'effort d'amortissement est proportionnel à la viscosité du fluide hydraulique et donc inversement proportionnel à la température. La masse volumique d'un flux hydraulique variant nettement moins que sa viscosité, il en résulte pour le mode de réalisation selon la figure 2 une sensibilité thermique très réduite par rapport au mode de réalisation de base selon la figure 1.

Avantageusement, le dispositif de l'invention comprend un clapet 140 ayant la forme générale d'un disque évidé en son centre et pourvu d'un rebord 142, le rebord 142 étant pourvu d'ouvertures radiales 141. Le clapet 140 est disposé par rapport au piston 110, au-delà du premier disque fléchissant 120 et d'un deuxième disque fléchissant 130. Le rebord 142 est orienté vers le premier disque fléchissant 120. Le clapet 140 est avantageusement couplé au premier ou aux premier et deuxième disque fléchissant afin de former une chambre de recompression du fluide en aval des trous 121.

Lorsque le piston 110 se déplace à l'intérieur du cylindre C, le fluide hydraulique qui sort du ou des trous 121 s'écoule dans la chambre comprise entre le clapet 140 et le premier disque fléchissant 120, avant de s'échapper par les ouvertures radiales 141 du clapet 140. Cette disposition de l'invention permet d'homogénéiser les pressions dans cette zone afin de minimiser les points bas de pression résultant de l'effet Venturi en sortie des trous 121. En effet, les points bas de pression sont néfastes au fonctionnement des amortisseurs car ils provoquent des phénomènes de micro-cavitation et notamment de dégazage du fluide hydraulique ce qui rendrait le fluide hydraulique compressible et réduirait ainsi son efficacité d'amortissement.

Lorsque la vitesse en détente augmente modérément, le premier disque fléchissant 120 se déforme dans une zone correspondant à son diamètre extérieur et découvre un passage annulaire entre un siège 115 formé sur le piston 110 et le premier disque fléchissant 120 lui-même. Il en résulte une baisse du taux d'amortissement qui peut être ajustée en modifiant l'épaisseur du premier disque fléchissant 120.

Lorsque la vitesse en détente augmente encore davantage, le premier disque fléchissant 120 se déforme de manière plus importante et soulève le clapet 140. Il en résulte une nouvelle baisse du taux d'amortissement dont la vitesse d'apparition peut être ajustée en modifiant les caractéristiques de précharge et de raideur d'un ressort 150 exerçant une poussée sur le clapet 140 en direction du piston 110.

Après ouverture du clapet 140, la variation du taux d'amortissement peut être ajustée au moyen de l'épaisseur du deuxième disque fléchissant 130 qui exerce un effet sur la raideur en flexion du premier disque fléchissant 120. Grâce à cette disposition de l'invention, il est possible de faire varier le taux d'amortissement en détente selon plusieurs vitesses et d'obtenir ainsi un meilleur compromis entre le confort dans un véhicule équipé d'amortisseurs comportant un dispositif d'amortissement de l'invention et le comportement d'un tel véhicule.

L'invention n'est pas limitée aux modes de réalisation décrits précédemment. Notamment, les colonnettes d'indexation du limiteur sur le piston peuvent être aménagées sur le piston et les encoches peuvent don être aménagées sur la face du limiteur en regard du piston.

## Revendications

1. Dispositif d'amortissement à laminage hydraulique pour amortir des oscillations de mouvement d'un fluide hydraulique entre deux volumes (A, B) délimités à l'intérieur d'un cylindre (C), la séparation des deux volumes (A, B) étant faite par un piston (110) destiné à se déplacer dans le cylindre (C) suivant un axe principal (X) du corps cylindrique (C) sous l'action d'une tige d'amortisseur (D) et comportant des canaux (113) permettant au fluide hydraulique de se déplacer, dans les deux sens, d'un volume à l'autre et des moyens d'obturation tarés (20) des canaux de compression (113), ledit dispositif comprenant en outre, un limiteur (100) conformé pour se déplacer solidairement avec le piston (110) suivant l'axe principal (X), les moyens d'obturation étant formés par des ensembles clapet-ressort (20), disposés entre le limiteur (100) et une première face du piston (110) en regard du limiteur (100), et par un premier disque fléchissant (120) d'obturation disposé du côté opposé du piston (110) par rapport au limiteur (100), **caractérisé en ce que** le limiteur (100) est pourvu de plusieurs facettes formées par des colonnettes (102) réparties sur la périphérie extérieure du limiteur (100) et de brise-jets (101) disposés sur sa face circonférentielle en regard de bossages circonférentiels (114) du piston (110).

2. Dispositif selon la revendication 1, **caractérisé en ce que** le limiteur (100) est indexé par rapport au piston (110) par des moyens formant butée coopérant avec des moyens formant encoche disposés respectivement sur le limiteur (100) et le piston (110), ou inversement.

3. Dispositif selon la revendication 1 ou 2, **caractérisé en ce que** le limiteur (100) est réalisé dans le même matériau que le piston (110).

4. Dispositif selon l'une quelconque des revendications 1 à 3, **caractérisé en ce que** le premier disque fléchissant (120) est muni de trous (121) et **en ce qu'**il est associé à un deuxième disque fléchissant (130) disposé du côté opposé du piston (110) par rapport au limiteur (100).

5. Dispositif selon la revendication 4, **caractérisé en ce qu'**il comprend un clapet (140) ayant la forme générale d'un disque évidé en son centre et pourvu d'un rebord (142), le rebord (142) étant pourvu d'ouvertures radiales (141); ledit clapet étant disposé sur le premier ou les premier et deuxième disques fléchissant.

6. Dispositif selon la revendication 4, **caractérisé en ce qu'**il comprend un clapet (140) ayant la forme générale d'un disque évidé en son centre et pourvu d'un rebord (142), le rebord (142) étant pourvu d'ouvertures radiales (141), et **en ce que** le clapet (140) est couplé au premier ou aux premier et deuxième disque fléchissant afin de former une chambre de recompression du fluide en aval des trous (121).

7. Amortisseur hydraulique, **caractérisé en ce qu'**il comprend un dispositif selon l'une quelconque des revendications 1 à 6.

## Claims

1. Damping device with hydraulic throttling for damping movement oscillations of a hydraulic fluid between two volumes (A, B) delimited inside a cylinder (C), the separation of the two volumes (A, B) being achieved by a piston (110) intended to move in the cylinder (C) along a main axis (X) of the cylindrical body (C) under the action of a damper rod (D) and comprising channels (113) allowing the hydraulic fluid to move, in both directions, from one volume to the other and preloaded means (20) for closing the compression channels (113), said device furthermore comprising a limiter (100) shaped so as to move integrally with the piston (110) along the main axis (X), the closure means being formed by valve/spring assemblies (20), arranged between the limiter (100) and a first face of the piston (110) opposite the limiter (100), and by a first flexible closure disc (120) arranged on the opposite side of the piston (110) with respect to the limiter (100), **characterised in that** the limiter (100) is provided with a plurality of facets formed by pillars (102) distributed around the outer periphery of the limiter (100) and jet breakers (101) arranged on its circumferential face opposite circumferential bosses (114) of the piston (110).

2. Device according to claim 1, **characterised in that** the limiter (100) is located with respect to the piston (110) by means forming a stop cooperating with means forming a notch which are arranged respectively on the limiter (100) and the piston (110), or vice versa.

3. Device according to claim 1 or 2, **characterised in that** the limiter (100) is made of the same material as the piston (110).

4. Device according to any one of claims 1 to 3, **characterised in that** the first flexible disc (120) is provided with holes (121), and **in that** it is associated with a second flexible disc (130) arranged on the opposite side of the piston (110) with respect to the limiter (100).

5. Device according to claim 4, **characterised in that** it comprises a valve (140) having the general shape of a disc hollowed out in its centre and provided with a flange (142), the flange (142) being provided with radial openings (141), said valve being arranged on the first or the first and second flexible discs.

6. Device according to claim 4, **characterised in that** it comprises a valve (140) having the general shape of a disc hollowed out in its centre and provided with a flange (142), the flange (142) being provided with radial openings (141), and **in that** the valve (140) is coupled to the first or to the first and second flexible discs so as to form a fluid recompression chamber downstream of the holes (121).

7. Hydraulic damper, **characterised in that** it comprises a device according to any one of claims 1 to 6.

## Patentansprüche

1. Dämpfungsvorrichtung mit Hydraulikdrossel zum Dämpfen der Bewegungsschwingungen eines Hydraulikfluids zwischen zwei Volumen (A, B), die innerhalb eines Zylinders (C) begrenzt sind, wobei die Trennung der beiden Volumen (A, B) durch einen Kolben (110) erfolgt, der dazu gedacht ist, sich in dem Zylinder (C) entlang einer Hauptachse (X) des zylindrischen Körpers (C) unter der Einwirkung einer Dämpferstange (D) zu bewegen, und umfassend Kanäle (113), die es dem Hydraulikfluid ermöglichen, sich in beiden Richtungen von einem Volumen zum anderen zu bewegen, und vorgespannte Verschlussmittel (20) der Verdichtungskanäle (113), wobei die Vorrichtung ferner einen Begrenzer (100) umfasst, der gestaltet ist, um sich einstückig mit dem Kolben (110) entlang der Hauptachse (X) zu bewegen, wobei die Verschlussmittel durch Klappen-Feder-Anordnungen (20), die zwischen dem Begrenzer (100) und einer ersten Seite des Kolbens (110) gegenüber dem Begrenzer (100) angeordnet sind, und durch eine erste nachgiebige Verschlussscheibe (120), die auf der gegenüberliegenden Seite des Kolbens (110) im Verhältnis zum Begrenzer (100) angeordnet ist, gebildet sind, **dadurch gekennzeichnet, dass** der Begrenzer (100) mit mehreren Facetten, die durch Säulchen (102) gebildet werden, die auf dem äußeren Umfang des Begrenzers (100) verteilt sind, und mit Strahlreglern (101), die auf seiner Umfangsseite gegenüber Umfangserhebungen (114) des Kolbens (110) angeordnet sind, versehen ist.

2. Vorrichtung nach Anspruch 1, **dadurch gekennzeichnet, dass** der Begrenzer (100) im Verhältnis zu dem Kolben (110) durch einen Anschlag bildende Mittel indiziert ist, die mit eine Einkerbung bildenden Mitteln zusammenwirken, die jeweils auf dem Begrenzer (100) und dem Kolben (110) oder umgekehrt angeordnet sind.

3. Vorrichtung nach Anspruch 1 oder 2, **dadurch gekennzeichnet, dass** der Begrenzer (100) aus dem gleichen Material ausgebildet ist wie der Kolben (110).

4. Vorrichtung nach einem der Ansprüche 1 bis 3, **dadurch gekennzeichnet, dass** die erste nachgiebige Scheibe (120) mit Löchern (121) versehen ist, und dass sie mit einer zweiten nachgiebigen Scheibe (130) verbunden ist, die auf der gegenüberliegenden Seite des Kolbens (110) im Verhältnis zum Begrenzer (100) angeordnet ist.

5. Vorrichtung nach Anspruch 4, **dadurch gekennzeichnet, dass** sie eine Klappe (140) umfasst, welche die allgemeine Form einer Scheibe aufweist, die in ihrer Mitte ausgehöhlt ist und mit einer Einfassung (142) ausgestattet ist, wobei die Einfassung (142) mit radialen Öffnungen (141) ausgestattet ist, wobei die Klappe auf der ersten oder den ersten und zweiten nachgiebigen Scheiben angeordnet ist.

6. Vorrichtung nach Anspruch 4, **dadurch gekennzeichnet, dass** sie eine Klappe (140) umfasst, welche die allgemeine Form einer Scheibe aufweist, die in ihrer Mitte ausgehöhlt ist und mit einer Einfassung (142) ausgestattet ist, wobei die Einfassung (142) mit radialen Öffnungen (141) ausgestattet ist, und dass die Klappe (140) mit der ersten oder mit der ersten und zweiten nachgiebigen Scheibe gekoppelt ist, um eine Kammer zum Nachverdichten des Fluids unterhalb der Löcher (121) zu bilden.

7. Hydraulikdämpfer, **dadurch gekennzeichnet, dass** er eine Vorrichtung nach einem der Ansprüche 1 bis 6 umfasst.
